(19) Europäisches Patentamt / European Patent Office / Office européen des brevets

(11) **EP 4 346 242 A1**

(12) **DEMANDE DE BREVET EUROPEEN**

(43) Date de publication:
**03.04.2024 Bulletin 2024/14**

(21) Numéro de dépôt: 23197001.3

(22) Date de dépôt: **12.09.2023**

(51) Classification Internationale des Brevets (IPC):
*H04W 4/024* (2018.01)   *B60W 60/00* (2020.01)
*G01C 21/34* (2006.01)   *H04W 4/029* (2018.01)

(52) Classification Coopérative des Brevets (CPC):
**H04W 4/029; B60W 60/00; G01C 21/34;
G01C 21/3453; H04W 4/024**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **30.09.2022 FR 2210048**

(71) Demandeur: **Orange**
**92130 Issy-les-Moulineaux (FR)**

(72) Inventeurs:
• **DRISSI, Maroua**
 **92326 Chatillon (FR)**
• **ALLIO, Sylvain**
 **92326 Chatillon (FR)**

(54) **DÉTERMINATION D'UN ITINÉRAIRE EN FONCTION DE LA QUALITÉ DE SERVICE D'UN RÉSEAU DE COMMUNICATION**

(57) L'invention concerne un procédé de détermination d'un itinéraire à parcourir par un objet communicant (OC), en fonction de la disponibilité d'un réseau de communication sur ledit itinéraire, comprenant ce qui suit, au niveau dudit objet :
- à partir de points de départ et d'arrivée dudit itinéraire, calculer (E2) des première et deuxième positions géographiques ($PG_d$, $PD_a$) associées respectivement aux points de départ et d'arrivée,
- déterminer (E3) au moins deux itinéraires entre les positions ($PG_d$, $PD_a$),
- envoyer (E4) à un dispositif (DP) de prédiction d'indicateur de performance de réseau de communication, au moins une position géographique ($PG_{1i}$, $PG_{2j}$) dudit objet contenue entre les positions ($PG_d$, $PD_a$), pour lesdits deux itinéraires,
- recevoir (E10) dudit dispositif, en relation avec ladite position ($PG_{1i}$, $PG_{2j}$), deux valeurs prédites d'un indicateur pour respectivement lesdits au moins deux itinéraires,
- sélectionner (E12) l'itinéraire correspondant à la valeur prédite la plus élevée.

FIG.4

EP 4 346 242 A1

**Description**

**Domaine de l'invention**

L'invention concerne les techniques de navigation permettant à un utilisateur de rechercher l'itinéraire qu'il doit suivre pour atteindre une destination de son choix. De manière plus particulière, l'invention concerne un procédé de détermination d'un itinéraire en fonction de la qualité de service d'un réseau de communication, ainsi qu'un dispositif correspondant.

**Art antérieur**

Les techniques de navigation, notamment GPS (« Global Positioning System » en anglais), sont aujourd'hui très répandues. Elles sont implémentées dans des terminaux dédiés qui peuvent par exemple être installés par l'utilisateur dans son véhicule ou être intégrés de série dans le véhicule de l'utilisateur. De telles techniques de navigation sont également implémentées dans les smartphones (« terminaux intelligents »), ce qui permet à l'utilisateur de se déplacer plus aisément, qu'il se trouve en voiture, à pied, à vélo ou même dans les transports en commun. A cet effet, de telles techniques de navigation sont mises en oeuvre via des applications natives installées dans ces smartphones ou via des applications téléchargeables au préalable. Certaines de ces applications ne fonctionnent qu'avec une connexion Internet, d'autres non.

Les techniques de navigation actuelles les plus sophistiquées permettent à l'utilisateur de déterminer un itinéraire optimal à la suite d'une sélection par ce dernier de différents critères, tels que par exemple la distance, la durée du trajet, l'état du trafic, le coût, etc.

Par ailleurs, aujourd'hui, avec la multiplicité des usages et services Internet et du besoin quasi-permanent de connectivité, l'utilisateur qui se déplace sur un itinéraire a besoin de bénéficier d'une certaine qualité de service du réseau de communication auquel son smartphone, son terminal de navigation ou son véhicule est connecté, afin de pouvoir par exemple, tout en se déplaçant sur son itinéraire, écouter de la musique en ligne, utiliser une application de conduite automatisée, par exemple V2X (« Vehicle-to-Everything » en anglais), télé-charger une application, un film, participer à une vidéo conférence ou autres. Pour répondre à un tel besoin, certaines techniques de navigation actuelles prennent maintenant en compte la couverture réseau dans la recherche de l'itinéraire optimal sur tout ou partie de l'itinéraire.

Toutefois, malgré la prise en compte de la couverture réseau, ces techniques de navigation ne permettent pas d'anticiper un changement de qualité de service ou QoS (« Quality of Service » en anglais) relative à un service, un usage ou une application connecté(e) requis(e) par l'utilisateur, dans une position future précise de l'itinéraire déterminé, et un instant futur correspondant à cette position. La couverture réseau n'est pas en effet un critère suffisamment précis pour espérer satisfaire les besoins en connectivité de l'utilisateur sur son itinéraire. Bien que l'itinéraire déterminé propose une couverture réseau suffisante sur une portion du trajet, certains indicateurs de performance de ce réseau, par exemple la latence et/ou la fiabilité et/ou le débit, etc. peuvent évoluer au cours du temps, par exemple en fonction de l'état du réseau de communication et de la situation du trafic routier, et de ce fait, n'auront peut-être pas le niveau requis, nécessaire au bon fonctionnement du service, de l'usage ou de l'application connecté(e) particulier requis par l'utilisateur sur cette portion de trajet, les exigences de qualité de service variant d'un service, d'un usage, ou d'une application à l'autre.

Ainsi, même en prenant en compte la couverture réseau dans la recherche de l'itinéraire optimal, les procédés de détermination d'itinéraire actuels manquent de précision et ne sont pas suffisamment dynamiques, ce qui nuit aux performances des systèmes de navigation actuels. Du fait du manque d'anticipation du calcul de tels indicateurs de performance dans la recherche d'itinéraire, de tels procédés de détermination d'itinéraire ne sont en outre pas adaptés à certaines applications automobiles telles que les applications de conduite téléopérée, de conduite autonome, etc., risquant de mettre en danger la sécurité des utilisateurs de véhicules autonomes ou quasi-autonomes.

**Objet et résumé de l'invention**

Un des buts de l'invention est de remédier à des inconvénients de l'état de la technique précité.

A cet effet, un objet de la présente invention concerne un procédé de détermination d'un itinéraire à parcourir par un objet communicant, en fonction de la disponibilité d'un réseau de communication sur l'itinéraire, comprenant ce qui suit, au niveau de l'objet communicant :

- à partir d'un point de départ et d'un point d'arrivée de l'itinéraire, calculer une première position géographique associée au point de départ et une deuxième position géographique associée au point d'arrivée,
- déterminer au moins deux itinéraires entre les première et deuxième positions géographiques calculées.

Un tel procédé est caractérisé en ce qu'il met en oeuvre ce qui suit :

- envoyer à un dispositif de prédiction d'au moins un indicateur de performance de réseau de communication, au moins une position géographique de l'objet communicant contenue entre les première et deuxième positions géographiques, pour les au moins deux itinéraires,
- recevoir en provenance du dispositif de prédiction, en relation avec ladite au moins une position géographique, deux valeurs prédites dudit au moins indicateur pour respectivement les au moins deux itinéraires,
- sélectionner, parmi les au moins deux itinéraires, l'itinéraire correspondant à la valeur prédite la plus élevée parmi les deux valeurs prédites.

L'invention permet avantageusement de sélectionner un itinéraire qui bénéficie de la meilleure qualité de service pour répondre aux besoins en connectivité de l'utilisateur de l'objet communicant sur au moins une portion de son trajet sur cet itinéraire qui contient la position géographique future. En outre, le fait de prédire un indicateur de performance d'un réseau de communication disponible sur l'itinéraire déterminé améliore les performances du procédé de détermination d'itinéraire, une telle détermination étant mise en oeuvre avec un niveau de granulométrie plus fin que ceux de l'art antérieur car ciblée sur un indicateur de performance particulier du réseau de communication disponible et non juste sur la présence ou le type d'un réseau de communication. En outre, l'intérêt de prédire un tel indicateur de performance permet, tout au long de l'itinéraire sur lequel évolue l'objet communicant, de s'adapter de manière dynamique et précise et suffisamment en amont, à un changement de qualité de service du réseau de communication disponible sur l'itinéraire déterminé, à au moins une position géographique future donnée. De cette manière, sur l'itinéraire ainsi déterminé, l'objet communicant est en mesure d'ajuster son comportement avant que le changement de QoS ne prenne effet au niveau de la position géographique future. Ainsi le procédé de détermination d'itinéraire selon l'invention est adapté à tout type d'objet communicant, y comprend les véhicules connectés qui mettent en oeuvre certaines applications automobiles telles que les applications de conduite téléopérée, de conduite autonome, etc., ce qui apporte une grande sécurité pour le ou les utilisateurs ou passagers de véhicules connectés.

Selon un mode de réalisation particulier du procédé de détermination d'itinéraire, le procédé comprend :

- une combinaison de la sélection d'itinéraire à une autre sélection d'un des au moins deux itinéraires qui optimise l'application d'au moins un paramètre de configuration d'itinéraire entre les première et deuxième positions géographiques,
- une sélection, parmi les au moins deux itinéraires, de l'itinéraire qui maximise un critère d'optimisation du trajet entre les première et deuxième positions géographiques.

Un tel mode de réalisation permet de déterminer un itinéraire en prenant en compte plusieurs critères qui sont non comparables entre eux, c'est-à-dire exprimés en unités différentes, sans nécessairement les transformer en critères économiques, ni en une fonction unique. En effet, un critère tel que la QoS n'est pas comparable avec un paramètre de configuration d'itinéraire tel que la distance du trajet et/ou la durée du trajet et/ou le trafic et/ou le coût, etc. Il ne s'agit pas de rechercher un optimum, mais une solution de compromis qui peut prendre diverses formes : choix, affectation ou classement.

Selon un mode de réalisation particulier du procédé de détermination d'itinéraire, la combinaison met en oeuvre :

- une première pondération de la sélection de l'itinéraire correspondant à la valeur prédite sélectionnée dudit au moins un indicateur de performance,
- une deuxième pondération de la sélection de l'itinéraire optimisant l'application d'au moins un paramètre de configuration d'itinéraire.

Un tel mode de réalisation permet, lors de la détermination de l'itinéraire, d'accorder plus d'importance à un critère tel que la QoS, le coût du trajet, la distance à parcourir, etc., plutôt qu'un autre critère, selon le profil de l'utilisateur de l'objet communicant.

Selon un mode de réalisation particulier du procédé de détermination d'itinéraire, le au moins un paramètre de configuration est une application ou un service de communication destiné à être utilisé entre les première et deuxième positions géographiques.

Un tel mode de réalisation permet avantageusement de prendre en compte comme critère supplémentaire de détermination de l'itinéraire une application ou un service de communication que l'utilisateur souhaite utiliser durant son trajet. Une telle application ou service de communication peut être par exemple dédiée à une communication vocale en 4G, le téléchargement d'une vidéo, l'écoute de musique en streaming, la conduite téléopérée, la conduite autonome, etc.

Selon un mode de réalisation particulier du procédé de détermination d'itinéraire, l'application ou le service de communication est sélectionnable ou mis en oeuvre par défaut.

Un tel mode de réalisation permet à l'utilisateur de sélectionner, préalablement à la détermination d'un itinéraire selon l'invention, une application ou un service de communication qu'il souhaite utiliser durant son trajet, à l'aide d'un paramétrage dédié mis en oeuvre par l'objet communicant ou à l'aide d'une interface connectée à l'objet communicant. A titre d'alternative, une telle sélection est mise en oeuvre automatiquement, c'est-à-dire sans l'aide de l'utilisateur. Une telle sélection automatique se produit dans le cas par exemple où l'objet communicant est un véhicule connecté, ce véhicule connecté comprenant notamment une application d'appel d'urgence qui est automatiquement sélectionnée.

Selon un mode de réalisation particulier du procédé de détermination d'itinéraire, la sélection de l'application ou du service de communication déclenche la génération d'au moins un paramètre de communication ou d'au moins un indicateur de performance d'un réseau de communication, le au moins un paramètre de communication ou le au moins un indicateur de performance permettant le maintien du fonctionnement de l'application ou du service de communication entre les première et deuxième positions géographiques.

Un tel mode de réalisation permet avantageusement de cibler précisément et automatiquement les besoins en connectivité de l'utilisateur pour une application ou un service de communication sélectionné par défaut ou par l'utilisateur, et de prendre en compte de tels besoins dans la détermination de l'itinéraire. Si l'utilisateur a par exemple sélectionné une application qui nécessite une couverture réseau de type 5G, le procédé de détermination d'itinéraire selon l'invention ne prendra en compte que les trajets couverts par un réseau de communication disponible de type 5G et ajoutera les autres critères (distance, coût, temps, etc.) pour affiner la recherche. Selon un autre exemple, si un utilisateur a sélectionné une application de streaming, le procédé de détermination d'itinéraire selon l'invention sera exigeant sur un indicateur de performance particulier, à savoir la bande passante du réseau de communication disponible sur l'itinéraire. Selon encore un autre exemple, si un utilisateur utilise un véhicule connecté, il n'est pas supposé connaître les besoins en connectivité des applications ou services de communication associés au véhicule connecté et éventuellement sélectionnés par cet utilisateur. A cet effet, le procédé de détermination d'itinéraire selon l'invention sera en mesure de déduire le et/ou les indicateurs de performance à considérer pour ces applications ou services et une valeur seuil de chacun de ces indicateurs.

Selon un mode de réalisation particulier du procédé de détermination d'itinéraire, lorsque l'objet communicant se déplace sur l'itinéraire qui a été sélectionné et qu'une application ou un service de communication de l'objet communicant est utilisé, l'utilisation est détectée dans le réseau de communication couvrant la position géographique courante de l'objet communicant, de sorte que lorsque l'objet communicant s'approche d'une position géographique future, pour laquelle a été calculée une valeur prédite d'au moins un indicateur de performance, et que la valeur prédite ne respecte pas une valeur seuil du au moins un indicateur de performance, permettant d'utiliser l'application ou le service de communication, au moins un élément du réseau de communication couvrant la position géographique future est adapté pour que la valeur prédite respecte la valeur seuil.

Un tel mode de réalisation permet avantageusement de mettre en oeuvre, de manière dynamique et en amont, sur l'itinéraire sélectionné et lorsqu'une application ou un service de communication est utilisé, une adaptation du réseau de communication, afin d'améliorer la QoS à une position géographique future vers laquelle se déplace l'objet communicant, et cela sans faire de concession sur les éventuels autres critères ou paramètres de configuration de l'itinéraire qui ont été utilisés pour déterminer l'itinéraire.

Les différents modes ou caractéristiques de réalisation précités peuvent être ajoutés indépendamment ou en combinaison les uns avec les autres, au procédé de détermination d'itinéraire défini ci-dessus.

Un objet de la présente invention concerne également un objet communicant adapté pour déterminer un itinéraire à parcourir par l'objet communicant, en fonction de la disponibilité d'un réseau de communication sur l'itinéraire, l'objet communicant étant configuré pour :

- à partir d'un point de départ et un point d'arrivée dudit itinéraire, calculer une première position géographique associée au point de départ et une deuxième position géographique associée au point d'arrivée,
- déterminer au moins deux itinéraires entre les première et deuxième positions géographiques calculées.

Un tel objet communicant est caractérisé en ce qu'il est configuré en outre pour :

- envoyer à un dispositif de prédiction d'au moins un indicateur de performance d'un réseau de communication disponible sur les au moins deux itinéraires, au moins une position géographique de l'objet communicant contenue entre les première et deuxième positions géographiques, pour les au moins deux itinéraires,
- recevoir en provenance du dispositif de prédiction, en relation avec la au moins une position géographique, deux valeurs prédites dudit au moins indicateur pour respectivement les au moins deux itinéraires,
- sélectionner, parmi les au moins deux itinéraires, l'itinéraire correspondant à la valeur prédite la plus élevée parmi les deux valeurs prédites.

Un tel objet communicant est notamment adapté pour mettre en oeuvre le procédé de détermination d'itinéraire selon l'un quelconque des modes de réalisation décrits précédemment.

Un objet de la présente invention concerne également un dispositif de prédiction d'au moins un indicateur de performance d'un réseau de communication.

Un tel dispositif de prédiction est caractérisé en ce qu'il est configuré pour mettre en oeuvre ce qui suit :

- recevoir, en provenance d'un objet communicant, au moins une position géographique appartenant à au moins deux itinéraires déterminés par l'objet communicant,
- calculer, en relation avec la au moins une position géographique, deux valeurs prédites correspondantes dudit au moins indicateur pour respectivement les au moins deux itinéraires,
- envoyer à l'objet communicant les deux valeurs prédites correspondantes dudit au moins indicateur.

Un objet de la présente invention concerne également un système de détermination d'un itinéraire à parcourir par un objet communicant.

Un tel système est caractérisé en ce qu'il comprend :

- l'objet communicant mettant en oeuvre le procédé de détermination d'itinéraire précité,
- le dispositif de prédiction précité.

L'invention concerne encore un programme d'ordinateur comportant des instructions pour la mise en oeuvre du procédé de détermination d'un itinéraire selon l'invention, selon l'un quelconque des modes particuliers de réalisation décrits précédemment, lorsque ce programme est exécuté par un processeur.

De telles instructions peuvent être stockées durablement dans un support mémoire non transitoire de l'objet communicant et/ou d'un terminal de communication et/ou d'un dispositif de navigation mettant en oeuvre le procédé de détermination d'itinéraire selon l'invention.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement ou support d'informations lisible par un ordinateur, et comportant des instructions d'un programme d'ordinateur tel que mentionné ci-dessus.

Le support d'enregistrement peut être n'importe quelle entité ou dispositif capable de stocker le programme. Par exemple, le support peut comporter un moyen de stockage, tel qu'une ROM (« *Read Only Memory* » en anglais), par exemple un CD ROM (« *Compact Disc Read-Only Memory* » en anglais), un ADN (acide désoxyribonucléique) synthétique ou une ROM de circuit microélectronique, ou encore un moyen d'enregistrement magnétique, par exemple un support mobile, un disque dur ou un SSD (« *Solid State-Drive* » en anglais).

D'autre part, le support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau, par un exemple un réseau de type Internet.

Alternativement, le support d'enregistrement peut être un circuit intégré dans lequel le programme est incorporé, le circuit étant adapté pour exécuter ou pour être utilisé dans l'exécution du procédé de détermination d'itinéraire précité.

Selon un exemple de réalisation, la présente technique est mise en oeuvre au moyen de composants logiciels et/ou matériels. Dans cette optique, le terme « module » ou « interface » peut correspondre dans ce document aussi bien à un composant logiciel, qu'à un composant matériel ou à un ensemble de composants matériels et logiciels.

**Brève description des dessins**

D'autres caractéristiques et avantages apparaîtront à la lecture de modes de réalisation particuliers de l'invention, donnés à titre d'exemples illustratifs et non limitatifs, et des dessins annexés, parmi lesquels :

La [Fig. 1] représente un système de détermination d'itinéraire selon un mode de réalisation de l'invention,
La [Fig. 2] représente un objet communicant dans un mode de réalisation particulier de l'invention,
La [Fig. 3] représente un dispositif de prédiction de qualité de service dans un mode de réalisation particulier de l'invention,
La [Fig. 4] représente les principales actions mises en oeuvre dans le procédé de détermination d'itinéraire, selon un mode de réalisation particulier de l'invention,
La [Fig. 5] représente des actions supplémentaires mises en oeuvre dans le procédé de détermination d'itinéraire de la figure 4, selon un mode de réalisation particulier de l'invention,
La [Fig. 6] représente des actions supplémentaires mises en oeuvre dans le procédé de détermination d'itinéraire de la figure 4, selon un mode de réalisation particulier de l'invention,

La [Fig. 7] représente un exemple d'application du procédé de détermination d'itinéraire, selon un mode de réalisation de l'invention.

## Description détaillée d'un mode de réalisation de l'invention

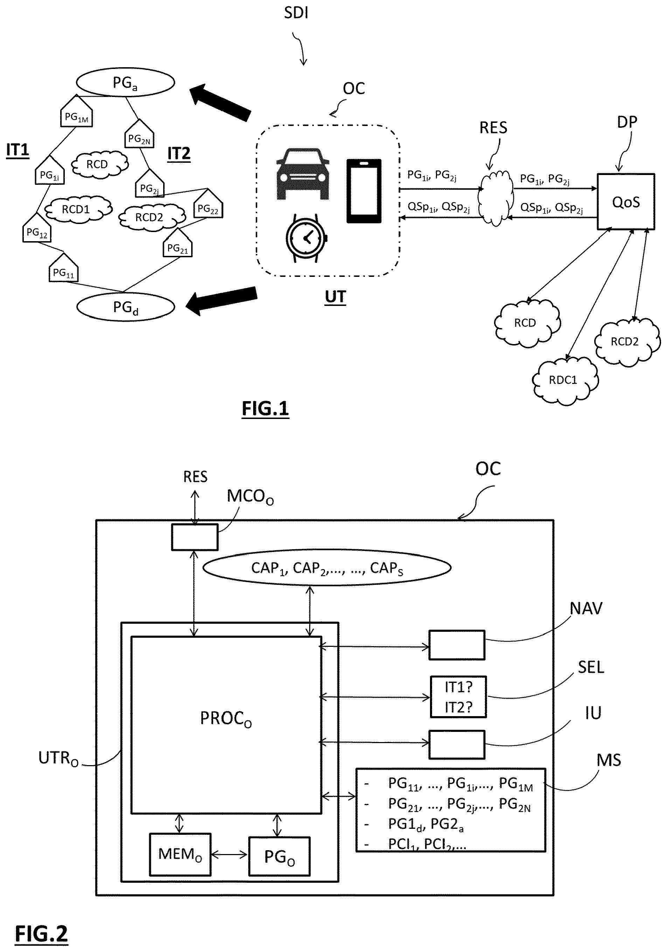

La figure 1 représente un système de détermination d'itinéraire, désigné SDI, selon un mode de réalisation de l'invention.

Un tel système comprend :

- un objet connecté ou communicant OC associé à un utilisateur UT,
- un dispositif de prédiction de qualité de service QoS, désigné DP, configuré pour communiquer avec l'objet OC, via un réseau RES, par exemple de type IP et/ou circuit.

Dans l'exemple de la figure 1, l'objet communicant OC est par exemple un véhicule connecté, ici une voiture, un terminal de communication de type tablette ou smartphone, une montre connectée, etc. A ce titre, l'objet communicant OC est doté nativement d'une pluralité de capteurs/détecteurs tels que par exemple une caméra et/ou un capteur de vitesse et/ou un dispositif de géolocalisation de type GPS, etc.

Le dispositif de géolocalisation de type GPS, intégré ou interfacé avec un dispositif de navigation géographique, permet à l'objet communicant OC de déterminer quel serait l'itinéraire le plus adapté selon au moins un critère de choix donné, parmi au moins deux itinéraires IT1 et IT2 possibles, pour que l'utilisateur UT de cet objet se rende d'un point de départ à un point d'arrivée correspondant respectivement à des première et deuxième positions géographiques, respectivement $PG_d$ et $PG_a$, calculées par le dispositif de géolocalisation.

Conformément à l'invention, un tel au moins un critère de choix est la qualité de service ressentie par l'objet communicant OC dans un réseau de communication disponible à une position géographique donnée de l'itinéraire IT1 et de l'itinéraire IT2.

Comme représenté sur la figure 1 :

- l'itinéraire IT1 est défini par une pluralité P1 de positions géographiques futures $PG_{11}$, $PG_{12}$, ..., $PG_{1i}$, ..., $PG_{1M}$, avec $M \geq 1$, et $1 \leq i \leq M$, une telle pluralité P1 étant comprise entre les première et deuxième positions géographiques $PG_d$ et $PG_a$,
- l'itinéraire IT2 est défini par une pluralité P2 de positions géographiques futures $PG_{21}$, $PG_{22}$, ..., $PG_{2j}$, ..., $PG_{2N}$, avec $N \geq 1$ et $1 \leq j \leq N$, une telle pluralité P2 étant comprise entre les première et deuxième positions géographiques $PG_d$ et $PG_a$.

M peut être égal ou différent de N. Les itinéraires IT1 et IT2 peuvent contenir en commun ou pas au moins une même position géographique future.

Dans le cas où la détermination d'itinéraire est planifiée à l'avance, les positions géographiques de départ $PG_d$ et d'arrivée $PG_a$ sont également considérées comme des positions géographiques futures.

Dans le cas où la détermination d'itinéraire est mise en oeuvre au moment où l'utilisateur UT décide de se déplacer immédiatement sur cet itinéraire à l'aide d'un objet communicant OC, la position géographique de départ $PG_d$ est considérée comme une position géographique courante et la position géographique d'arrivée $PG_a$ est considérée comme une position géographique future.

Une telle détermination d'itinéraire prend notamment en compte la présence d'un réseau de communication RCD disponible sur tout ou partie des itinéraires IT1 et IT2. Un tel réseau de communication peut être le même pour les deux itinéraires IT1 et IT2. Il peut s'agir par exemple d'un réseau 3G, 4G, 5G, WiFi, etc.

A titre d'alternative, il peut s'agir de deux réseaux de communication différents : RCD1 pour tout ou partie de l'itinéraire IT1 et RCD2 pour tout ou partie de l'itinéraire IT2. Dans un exemple de réalisation, le réseau RCD1 est un réseau 4G et le réseau RCD2 est un réseau 5G.

Dans le système SDI de détermination d'itinéraire selon l'invention, l'objet communicant OC est configuré pour :

- transmettre au dispositif DP de prédiction de qualité de service, via le réseau RES, au moins une position géographique de l'itinéraire IT1, par exemple $PG_{1i}$, respectivement au moins une position géographique de l'itinéraire IT2, par exemple $PG_{2j}$,
- recevoir en retour du dispositif DP de prédiction de qualité de service, des valeurs prédites de qualité de service $QSp_{1i}$ et $QSp_{2j}$ associées respectivement aux deux positions géographiques $PG_{1i}$ et $PG_{2j}$.

Dans le système SDI de détermination d'itinéraire selon l'invention, le dispositif DP de prédiction de qualité de service est configuré pour, à partir des positions géographiques $PG_{1i}$ et $PG_{2j}$ reçues en provenance de l'objet communicant OC :

- déterminer des valeurs prédites de qualité de service $QSp_{1i}$ et $QSp_{2j}$, c'est à dire des valeurs d'au moins un indicateur de performance représentatif de la qualité de service pour l'objet communicant OC, pour chacune des deux positions géographiques $PG_{1i}$ et $PG_{2j}$ reçues, dans le réseau de communication disponible RCD couvrant ces deux positions ou dans les réseaux de communication disponibles RCD1 et RCD2 couvrant respectivement ces deux positions,
- prédire deux valeurs respectives $QSp_{1i}$ et $QSp_{2j}$ dudit au moins un indicateur de performance, pour respectivement les deux positions, à partir de valeurs passées dudit au moins un indicateur qui ont été collectées dans le réseau de communication RCD ou dans les réseaux de communication RCD1 et RCD2.

Selon l'invention, un indicateur de performance de réseau de communication est par exemple le type de couverture 3G, 4G, 5G, WiFi, etc, le débit minimal requis, le taux ou le nombre de paquets perdus acceptable, la latence maximale admissible des paquets, etc. La mesure d'un tel indicateur permet ainsi d'évaluer, pour un réseau de communication donné, si les exigences en matière de qualité de service sont remplies ou pas.

**Description d'un mode de réalisation de l'objet communicant OC**

La figure 2 présente la structure simplifiée de l'objet communicant OC qui est adapté pour mettre en oeuvre le procédé de détermination d'itinéraire qui va être décrit ci-dessous.

A cet effet, un tel objet communicant OC comprend :

- un ou plusieurs capteurs/détecteurs $CAP_1$, $CAP_2$, ..., CAPs ($S \geq 1$), tels que par exemple une caméra, un capteur qui détecte le niveau de la charge de la batterie si l'objet communicant OC est un véhicule, un capteur de vitesse, un dispositif de géolocalisation de type GPS (« *Global Positioning System* » en anglais), un capteur d'empreinte digitale, etc...
- un module de navigation NAV de type GPS configuré pour déterminer un itinéraire à suivre par l'utilisateur UT de l'objet communicant OC,
- un module SEL de sélection d'itinéraire parmi les au moins deux itinéraires IT1, IT2,
- une interface utilisateur IU comprenant classiquement un clavier (physique ou numérique), éventuellement un microphone et/ou un haut-parleur,
- un module ou interface de communication MCOo qui est configuré(e) pour communiquer via par exemple les technologies de radiotéléphonie cellulaires (5G par exemple), IP, circuit, etc., avec le dispositif de prédiction DP de qualité de service,
- une mémoire de stockage MS pour enregistrer temporairement les postions géographiques de départ $PG_d$ et d'arrivée $PG_a$ des itinéraires IT1 et IT2, les pluralités P1, P2 de positions géographiques, et le cas échéant un ou plusieurs paramètres de configuration $PCI_1$, $PCI_2$,..., de l'itinéraire à optimiser, tels que par exemple la distance du trajet et/ou la durée du trajet et/ou le trafic et/ou le coût du trajet (carburant, péage, etc.) et/ou encore une application ou un service de communication particulier que l'utilisateur UT souhaite utiliser sur l'itinéraire ou que l'objet communicant OC sélectionne par défaut, etc.

Les données représentatives d'une carte géographique destinée à contenir les itinéraires IT1 et IT2 peuvent également être stockées dans la mémoire MS ou une autre mémoire dédiée. Une telle carte géographique est destinée à être affichée dans sa totalité ou par portion sur l'écran de l'interface utilisateur IU. A titre d'alternative, une telle carte est diffusée de manière sonore via le et/ou les haut-parleurs de l'interface utilisateur IU.

Dans le cas où l'objet communicant OC est un véhicule connecté, le module de navigation NAV peut être déjà intégré au véhicule, en tant qu'élément de première monte, ou être un dispositif indépendant, du type de ceux qu'on trouve dans le commerce, et ainsi être connecté au véhicule à l'aide d'une liaison filaire ou sans-fil.

Dans le cas où l'objet communicant OC est par exemple un smartphone, un ordinateur personnel portable, une montre connectée, etc., le module de navigation NAV peut être une application native ou ayant été téléchargée au préalable dans l'objet communicant OC.

En variante, la mémoire MS peut être déportée dans un réseau de communication, un nuage (« *cloud* » en anglais), etc. et être rendue accessible par l'objet communicant OC, au moyen du module de communication MCOo ou d'un module de communication (non représenté) dédié à cet effet.

Selon un mode particulier de réalisation de l'invention, les actions exécutées par l'objet communicant OC, dans le cadre de la mise en oeuvre du procédé de détermination d'itinéraire conformément à la présente invention, sont mises en oeuvre par des instructions d'un programme d'ordinateur PGo. Pour cela, l'objet communicant OC a l'architecture classique d'un ordinateur et comprend notamment une mémoire MEMo, une unité de traitement UTRo, équipée par exemple d'un processeur PROCo, et pilotée par le programme d'ordinateur PGo stocké en mémoire MEMo. Le programme d'ordinateur PGo comprend des instructions pour mettre en oeuvre les actions exécutées par l'objet communicant OC, lorsque le programme est exécuté par le processeur PROCo, selon l'un quelconque des modes particuliers de réalisation de l'invention.

A l'initialisation, les instructions de code du programme d'ordinateur PGo sont par exemple chargées dans une mémoire RAM (non représentée) avant d'être exécutées par le processeur PROCo. Le processeur PROCo de l'unité de traitement UTRo met notamment en oeuvre, selon les instructions du programme d'ordinateur $PG_O$, les actions de détermination de points de départ $PG_d$ et d'arrivée $PG_a$, pour au moins les itinéraires IT1 et IT2, des actions de recueil des données issues du et/ou des capteurs $CAP_1$, $CAP_2$,..., $CAP_S$, notamment les données GPS de l'objet communicant OC, des actions de navigation de type GPS, des actions de calcul de la pluralité P1 et P2 de positions géographiques contenues entre les positions géographiques associées respectivement aux points de départ $PG_d$ et d'arrivée $PG_a$, des actions de communication avec le dispositif de prédiction DP, des actions de sélection d'itinéraire.

**Description d'un mode de réalisation du dispositif DP de prédiction d'indicateur de performance**

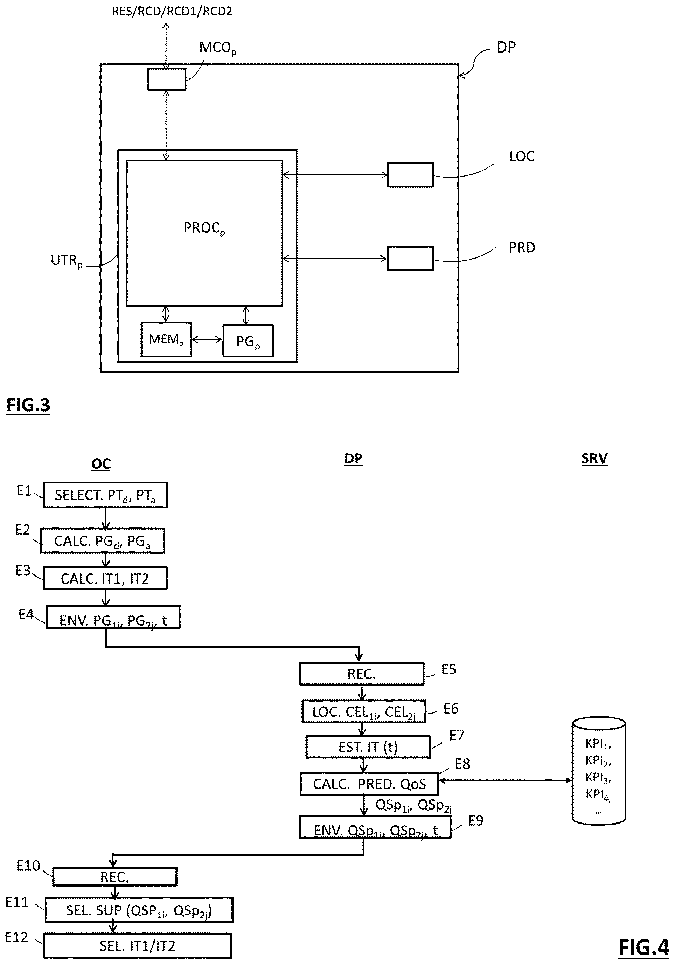

La figure 3 présente la structure simplifiée du dispositif DP de prédiction d'au moins un indicateur de performance, le dispositif DP étant adapté pour mettre en oeuvre certaines actions du procédé de détermination d'itinéraire qui va être décrit ci-dessous.

A cet effet, un tel dispositif de prédiction DP comprend :

- un module ou interface de communication $MCO_p$ qui est configuré(e) pour communiquer, via par exemple les technologies de radiotéléphonie cellulaires (5G par exemple), IP, circuit, etc., avec l'objet communicant OC, ledit module $MCO_p$ étant notamment configuré pour :

  -- recevoir en provenance de l'objet communicant OC, via le réseau RES de la figure 1, tout ou partie des postions géographiques de chacun des au moins deux itinéraires IT1 et IT2,
  -- envoyer à l'objet communicant OC des valeurs prédites d'au moins un indicateur de performance, en association avec les positions géographiques de de chacun des au moins deux itinéraires IT1 et IT2 qui ont été reçues,

- un module de localisation LOC configuré pour localiser au moins une cellule d'un réseau de communication couvrant une position géographique correspondant à au moins une position géographique de l'itinéraire IT1, par exemple la position géographique $PG_{1i}$, et une position géographique correspondant à au moins une position géographique de l'itinéraire IT2, par exemple la position géographique $PG_{2j}$,
- un module de prédiction PRD configuré pour prédire au moins un indicateur de performance du réseau de communication couvrant la position géographique correspondant à par exemple la position géographique $PG_{1i}$ de l'itinéraire IT1 et du réseau de communication couvrant la position géographique correspondant à par exemple la position géographique $PG_{2j}$ de l'itinéraire IT2.

Selon un mode particulier de réalisation de l'invention, les actions exécutées par le dispositif de prédiction DP, dans le cadre de la mise en oeuvre du procédé de détermination d'itinéraire conformément à la présente invention, sont mises en oeuvre par des instructions d'un programme d'ordinateur $PG_p$. Pour cela, le dispositif de prédiction DP a l'architecture classique d'un ordinateur et comprend notamment une mémoire $MEM_p$, une unité de traitement $UTR_p$, équipée par exemple d'un processeur $PROC_p$, et pilotée par le programme d'ordinateur $PG_p$ stocké en mémoire $MEM_p$. Le programme d'ordinateur $PG_p$ comprend des instructions pour mettre en oeuvre les actions exécutées par le dispositif de prédiction DP, lorsque le programme est exécuté par le processeur $PROC_p$, selon l'un quelconque des modes particuliers de réalisation de l'invention.

A l'initialisation, les instructions de code du programme d'ordinateur $PG_p$ sont par exemple chargées dans une mémoire RAM (non représentée) avant d'être exécutées par le processeur $PROC_p$. Le processeur $PROC_p$ de l'unité de traitement $UTR_p$ met notamment en oeuvre, selon les instructions du programme d'ordinateur $PG_p$, les actions de communication avec l'objet communicant OC ou avec un serveur de gestion du réseau RCD ou des réseaux RCD1, RCD2, les actions de localisation et de prédiction précitées.

Le dispositif de prédiction DP peut se trouver directement au niveau d'une infrastructure réseau, par exemple un contrôleur de station de base, une station de base, un routeur, etc.

Alternativement, ce dispositif de prédiction DP peut se trouver par exemple dans un serveur de gestion d'application du réseau de l'opérateur, au niveau du sous-système opérationnel, etc.

**Description d'un mode de réalisation d'un procédé de détermination d'itinéraire**

On décrit maintenant, en relation avec la figure 4, les principales étapes du procédé de détermination d'itinéraire mis en oeuvre dans le système de détermination d'itinéraire de la figure 1.

Au cours d'une étape E1, une fois que l'utilisateur UT a activé le module de navigation NAV via l'interface utilisateur IU, une sélection d'un point de départ $PT_d$ et d'un point d'arrivée $PT_a$ est mise en oeuvre. Les points de départ $PT_d$ et d'arrivée $PT_a$ comprennent par exemple une ville, une adresse précise d'une ville, un monument, etc.

A une étape E2, le module de navigation NAV calcule une première position géographique $PG_d$ associée au point de départ $PT_d$ et une deuxième position géographique $PG_a$ associée au point d'arrivée $PT_a$.

La sélection E1 des points départ $PT_d$ et d'arrivée $PT_a$ peut être effectuée à l'initiative de l'utilisateur UT à l'aide de l'interface IU de l'objet communicant OC.

La sélection du point de départ $PT_d$ peut être aussi effectuée automatiquement par l'objet communicant OC à partir d'une géolocalisation de cet objet qui est mise en oeuvre par le dispositif de géolocalisation GPS de l'objet communicant OC. De ce fait, la sélection E1 du point de départ $PT_d$ et le calcul de sa position géographique associée $PG_d$ font partie d'une seule et même étape.

A une étape E3, au moins deux itinéraires IT1 et IT2 possibles sont déterminés entre les positions géographiques $PG_d$ et $PG_a$ à l'aide du module de navigation NAV.

Une telle détermination est classique et est mise en oeuvre à l'aide d'un algorithme de calcul dédié.

L'itinéraire IT1 comprend les positions géographiques suivantes qui se succèdent temporellement : $PG_d$, PGn, $PG_{12}$, ..., $PG_{1i}$, ..., $PG_{1M}$, $PG_a$.

L'itinéraire IT2 comprend les positions géographiques suivantes qui se succèdent temporellement : $PG_d$, $PG_{21}$, $PG_{22}$, ..., $PG_{2j}$, ..., $PG_{2N}$, $PG_a$.

Les itinéraires IT1 et IT2 peuvent être affichés sur l'écran de l'interface utilisateur IU.

Dans le contexte de l'invention, il est considéré que l'utilisateur UT a des besoins en connectivité sur les itinéraires IT1 et IT2 proposés.

De tels besoins en connectivité sont liés au fait que, durant le trajet de l'utilisateur UT sur l'itinéraire à déterminer, l'utilisateur, à titre d'exemples non exhaustifs et non limitatifs :

- doit participer à une visioconférence,
- souhaite écouter de la musique en streaming,
- et dans le cas particulier où l'objet communicant OC est un véhicule connecté, souhaite activer/utiliser certaines applications dédiées, par exemple de type V2X, telles que la conduite en peloton, la conduite coopérative, la conduite à distance, etc.

Chacun des besoins en connectivité précités implique des exigences particulières en matière de qualité de service qui dépend des performances du réseau de communication dans lequel se trouve l'objet communicant OC à un moment donné. De telles exigences sont mesurables à l'aide d'un ou de plusieurs indicateurs de performance de réseau, appelés KPI (« *Key Performance Indicator* » en anglais), tels que par exemple :

- la latence $KPI_1$ exprimée en ms,
- le taux de paquets perdus ou fiabilité $KPI_2$ exprimé en %,
- le débit $KPI_3$ exprimé en Mbps,
- le type de couverture réseau $KPI_4$ : 2G, 3G, 4G, 5G, WiFi, etc,

S'agissant d'une visioconférence, le et/ou les indicateurs de performance à prendre en compte sont notamment le débit et la latence, et dans le cas où l'objet communicant OC est un véhicule connecté, le type de couverture réseau qui est 5G.

S'agissant d'une écoute de musique en streaming, le et/ou les indicateurs de performance à prendre en compte est notamment le débit.

S'agissant d'applications V2X, le tableau T1 ci-dessous récapitule ces exigences pour les applications telles que par exemple la conduite en peloton, la conduite coopérative, la conduite à distance.

[Table T1]

| Application | Latence de bout en bout (ms) | Fiabilité (%) | Débit (Mbps) | Type couverture |
|---|---|---|---|---|
| Peloton | 10 | 99.99 | 50-65 | 4G/5G |
| Conduite coopérative | 3-10 | 99.99 | 30-53 | 5G |

(suite)

| Application | Latence de bout en bout (ms) | Fiabilité (%) | Débit (Mbps) | Type couverture |
|---|---|---|---|---|
| Conduite à distance | 5 | 99.99 | 1-25 | 5G |

A une étape E4 :

- au moins une position géographique de l'itinéraire IT1, par exemple la position $PG_{1i}$, est envoyée au dispositif de prédiction DP via le réseau RES, par l'intermédiaire du module de communication MCOo de l'objet communicant OC,
- au moins une position géographique de l'itinéraire IT2, par exemple la position $PG_{2j}$, est envoyée au dispositif de prédiction PRED via le réseau RES, par l'intermédiaire du module de communication MCOo de l'objet communicant OC.

De manière connue en soi, de telles positions géographiques $PG_{1i}$ et $PG_{2j}$ sont associées respectivement à un instant t qui a été estimé par le module de navigation NAV, cet instant t correspondant à l'arrivée de l'objet communicant OC à ces deux positions $PG_{1i}$ et $PG_{2j}$, sur les itinéraires IT1 et IT2 respectivement.

Dans le cas où l'objet communicant OC se déplace à une certaine vitesse, la valeur de cette vitesse est également communiquée en E4 au dispositif de prédiction DP.

Tout ou partie des positions géographiques, ainsi que leurs instants associés, sur chacun des itinéraires IT1 et IT2, peuvent être envoyés au dispositif de prédiction DP.

A une étape E5, le dispositif de prédiction DP reçoit les positions $PG_{1i}$ et $PG_{2j}$, via son module de communication $MCO_p$, et l'instant correspondant t.

A une étape E6, le dispositif de prédiction DP met en oeuvre une localisation, via son module de localisation LOC :

- d'une cellule $CEL_{1i}$ du réseau de communication RCD ou RCD1 qui couvre la position $PG_{1i}$,
- et d'une cellule $CEL_{2j}$ du réseau de communication RCD ou RCD2 qui couvre la position $PG_{2j}$.

Dans le cas du réseau RCD commun aux deux itinéraires IT1, IT2, la cellule $CEL_{1i}$ peut être la même que la cellule $CEL_{2j}$ ou être une cellule différente.

La localisation E6 peut être mise en oeuvre par le dispositif de prédiction DP. Dans un mode de réalisation alternatif, le dispositif de prédiction DP peut être configuré pour requérir, auprès d'un système de gestion de réseau de communication, une identification des cellules $CEL_{1i}$ et $CEL_{2j}$ à partir des positions $PG_{1i}$ et $PG_{2j}$ et de l'instant t qui ont été reçus en E4.

A une étape E7, le dispositif de prédiction DP estime un intervalle de temps IT qui contient l'instant t.

A une étape E8, dans l'intervalle de temps IT estimé, le dispositif de prédiction DP calcule, via son module de prédiction PRD (figure 3) :

- une valeur prédite $QSp_{1i}$ d'un ou de plusieurs des indicateurs de performance précités $KPI_1$, $KPI_2$, $KPI_3$, $KPI_4$, etc., en relation avec la position $PG_{1i}$,
- une valeur prédite $QSp_{2j}$ d'un ou de plusieurs des indicateurs de performance précités $KPI_1$, $KPI_2$, $KPI_3$, $KPI_4$, etc., en relation avec la position $PG_{2j}$.

Les valeurs des indicateurs de performance $KPI_1$, $KPI_2$, $KPI_3$, $KPI_4$, etc. sont mesurées dans un serveur SRV de gestion du réseau RCD, ou des réseaux RCD1 et RCD2.

Ladite prédiction E8 est au moins de type temporelle. A cet effet, les valeurs prédites QSpn, $QSp_{2j}$ pour un indicateur de performance donné, par exemple $KPI_1$, sont prédites à partir de valeurs de l'indicateur $KPI_1$ déjà obtenues à des instants précédents l'intervalle temporel IT, pour chacune des cellules $CEL_{1i}$ et $CEL_{2j}$.

Afin d'affiner cette prédiction, ladite prédiction E8 peut en outre être spatiale, c'est-à-dire que :

- la valeur prédite QSpn est obtenue en prenant aussi en compte une estimation, dans l'intervalle de temps IT, de la position de l'objet communicant OC dans la couverture réseau d'une station de base appartenant au réseau RCD ou au réseau RCD1,
- la valeur prédite $QSp_{2j}$ est obtenue en prenant aussi en compte une estimation, dans l'intervalle de temps IT, de la position de l'objet communicant OC, dans la couverture réseau d'une station de base appartenant au réseau RCD ou au réseau RCD2.

Une telle prédiction est par exemple décrite dans le document FR2113319 incorporé à titre de référence à la présente description.

A une étape E9, le dispositif de prédiction DP envoie à l'objet communicant OC, via le réseau RES, les valeurs prédites QSpn et $QSp_{2j}$, par l'intermédiaire du module de communication $MCO_p$.

L'objet communicant OC reçoit en E10 les valeurs prédites $QSp_{1i}$ et $QSp_{2j}$ via son module de communication MCOo.

A une étape E11, le module de sélection SEL de l'objet communicant OC sélectionne la valeur prédite la plus élevée parmi les valeurs prédites QSpn et $QSp_{2j}$.

A une étape E12, le module de sélection SEL de l'objet communicant OC sélectionne parmi les itinéraires alternatifs IT1, IT2, celui qui correspond à la valeur prédite la plus élevée qui a été sélectionnée en E11. Si c'est la valeur prédite $QSp_{1i}$ qui est la plus élevée, l'itinéraire IT1 est sélectionné comme ayant la meilleure qualité de service à la position $PG_{1i}$. Si c'est la valeur prédite $QSp_{2j}$ qui est la plus élevée, l'itinéraire IT2 est sélectionné comme ayant la meilleure qualité de service à la position $PG_{2j}$.

Le procédé de détermination d'itinéraire qui vient d'être décrit ci-dessus est mis à jour au fur et à mesure du déplacement de l'objet communicant OC sur l'itinéraire sélectionné.

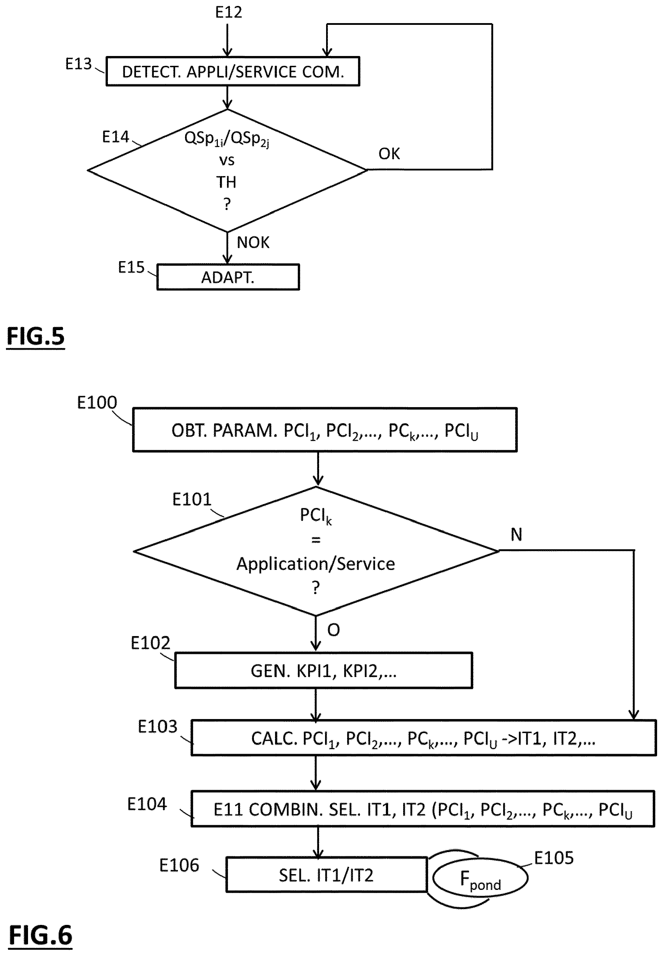

Dans un mode de réalisation de l'invention représenté sur la figure 5, lorsque l'objet communicant OC se déplace sur l'itinéraire sélectionné en E12 et qu'une application ou un service de communication est activé(e) ou utilisé(e), le serveur SRV de gestion de réseau détecte en E13 cette activation ou utilisation.

A une étape E14, la valeur d'indicateur de performance, $QSp_{1i}$ ou $QSp_{2j}$ selon l'itinéraire sélectionné, qui a été prédite en association avec une position future vers laquelle se dirige l'objet communicant OC, est comparée par le serveur SRV à une valeur seuil TH permettant d'utiliser correctement l'application ou le service de communication.

Si la valeur d'indicateur de performance $QSp_{1i}$ ou $QSp_{2j}$ ne respecte pas (NOK) la valeur seuil TH, au moins un élément du réseau de communication RCD ou RCD1/RCD2 qui couvre cette position future est adapté en E15 pour que la valeur d'indicateur de performance prédite QSpn ou $QSp_{2j}$ respecte cette valeur seuil TH.

Ce cas se produit lorsque l'utilisateur UT utilise par exemple une application de visioconférence, pour laquelle le débit doit être supérieur à une valeur TH=20Mbs. Si la valeur prédite du débit à cette position future est inférieure à 20Mbs, une adaptation d'au moins un élément de réseau sera mis en oeuvre dans le réseau de communication concerné, de manière à augmenter le débit au-dessus de la valeur TH à l'approche de l'objet OC à sa position future.

Dans un autre exemple non exhaustif, ce cas peut également se produire lorsque l'utilisateur UT utilise par exemple une application de conduite à distance, pour laquelle la latence doit être inférieure à une valeur TH=5 ms. Si la valeur prédite de la latence à cette position future est supérieure à 5 ms, une adaptation d'au moins un élément de réseau sera mis en oeuvre dans le réseau de communication concerné, de manière à réduire la latence en dessous de la valeur TH à l'approche de l'objet OC à sa position future.

Une telle adaptation peut être manuelle ou pilotée à distance par le serveur SRV Il peut s'agir d'une modification d'un paramétrage d'une antenne dans la cellule du réseau de communication concerné, d'un rééquilibrage des seuils de handover, etc.

Si la valeur d'indicateur de performance prédite QSpn ou $QSp_{2j}$ respecte (OK) la valeur seuil TH, le serveur SRV revient à l'étape E12 en attente d'une détection d'une utilisation/activation d'une application ou d'un service de communication.

L'adaptation qui vient d'être décrite permet de rendre le procédé de détermination d'itinéraire particulièrement flexible et proactif, tout en répondant de manière ciblée aux besoins en connectivité de l'utilisateur UT.

Dans un mode de réalisation de l'invention représenté sur la figure 6, le procédé de détermination d'itinéraire qui vient d'être décrit ci-dessus prend en compte au moins un paramètre de configuration d'itinéraire $PCI_k$ parmi une pluralité de paramètres de configuration d'itinéraire possibles $PCI_1$, $PCI_2$, ..., $PCI_k$, ..., $PCI_U$, avec $1 \leq k \leq U$.

A cet effet, à une étape E100, un ou plusieurs paramètres de configuration sont obtenus.

De manière non exhaustive, de tels paramètres de configuration comprennent :

- une distance à parcourir entre les positions géographiques de départ $PG_d$ et d'arrivée $PG_a$, pour chacun des itinéraires IT1, IT2, et/ou
- un temps pour parcourir chacun des itinéraires IT1, IT2 entre les positions géographiques de départ $PG_d$ et d'arrivée $PG_a$, et/ou
- un coût pour parcourir chacun des itinéraires IT1, IT2 entre les positions géographiques de départ $PG_d$ et d'arrivée $PG_a$, par exemple d'un point de vue carburant, péage, vignette, etc., et/ou,
- des routes à éviter, par exemple des autoroutes plutôt que des routes nationales, des carrefours dangereux, des routes non bitumées, etc., et/ou
- un service ou une application de communication que l'utilisateur UT souhaite utiliser durant son trajet sur l'itinéraire, tel que par exemple une application de visioconférence, un service de streaming de musique, une application de conduite à distance, etc.,

- etc.

De tels paramètres de configuration peuvent être sélectionnés manuellement ou oralement par l'utilisateur UT à l'aide de l'interface IU de l'objet communicant OC ou de toute interface utilisateur connectée à cet objet.

De tels paramètres de configuration peuvent être également générés automatiquement. En effet, dans le cas où l'objet communicant OC est un véhicule connecté, une application d'appel d'urgence est activée automatiquement sans que l'utilisateur UT n'ait besoin d'effectuer de sélection particulière. Dans un autre exemple, à la suite d'une identification par l'objet communicant OC de l'utilisateur UT, telle que par exemple une identification par mots de passe ou bio-métrique, un ou plusieurs paramètres de configuration préalablement associés à cette identification peuvent être sélectionnés après que l'objet communicant OC ait validé l'identification de l'utilisateur UT.

A une étape E101, pour au moins un paramètre de configuration d'itinéraire $PCI_k$, si ce paramètre est une application ou un service de communication, un ou plusieurs indicateurs de performance de réseau de communication sont générés en E102, en vue d'être exploités pour la prédiction. Sinon, le procédé de détermination d'itinéraire passe à une étape E103 suivante.

Par exemple, si une application de visioconférence est sélectionnée en tant que paramètre de configuration d'itinéraire, sont générés par l'objet communicant OC le et/ou les indicateurs de performance suivants :

- latence $KPI_1$ (ms)<5,
- débit $KPI_3$ (Mbps) $\leq$ 10,
- type de couverture réseau $KPI_4$ : 5G si l'objet communicant OC est un véhicule connecté.

Dans un autre exemple, si une application de conduite à distance est sélectionnée en tant que paramètre de configuration d'itinéraire, sont générés par l'objet communicant OC le et/ou les indicateurs de performance suivants :

- latence $KPI_1$ (ms)<5,
- fiabilité $KPI_2$ (%) $\geq$ 99.99,
- débit $KPI_3$ (Mbps) $\leq$ 25,
- type de couverture réseau $KPI_4$ : 5G.

A l'étape E103, pour chacun des au moins deux itinéraires IT1 et IT2, sont calculés, selon le/les paramètre(s) de configuration obtenu(s) :

- la distance à parcourir pour chaque itinéraire IT1, IT2, et/ou
- le coût pour chaque itinéraire IT1, IT2, et/ou
- le temps pour parcourir chaque itinéraire IT1, IT2, et/ou
- etc.

Dans le cas où est calculé le coût pour chaque itinéraire IT1, IT2, est calculé, à partir des informations de consommation du véhicule connecté OC, le coût du carburant consommé pour chaque itinéraire IT1, IT2, ainsi que le coût du/des péage(s) s'il y en a, etc.

Dans le cas où est calculé le temps pour parcourir chaque itinéraire IT1, IT2, l'état du trafic routier peut être pris en compte.

A une étape E104, la sélection E11 de l'itinéraire illustrée en figure 4 est combinée à une sélection d'itinéraire prenant en compte au moins un des paramètres de configuration d'itinéraire précités $PCI_1$, $PCI_2$, ..., $PCI_k$, ..., PClu.

A cet effet, une matrice MA des alternatives est calculée comme suit pour une pluralité d'itinéraires IT1, IT2, ..., ITn, avec n$\geq$1 :

[Math.1]
$$MA=\begin{pmatrix} x_{1,1} & x_{1,2} & \cdots & x_{1,V} \\ \vdots & \vdots & \ddots & \vdots \\ x_{n,1} & x_{n,2} & \cdots & x_{n,V} \end{pmatrix}$$

La matrice des alternatives MA est une matrice de décision multicritères qui comprend :

- une ligne pour chacun des n itinéraires,
- au moins une colonne contenant n valeurs prédites d'au moins un indicateur de performance de réseau $KPI_1$,

KPI$_2$, ..., pour respectivement les n itinéraires,
- et au moins une autre colonne contenant n valeurs d'au moins un paramètre de configuration d'itinéraire parmi les paramètres PCI$_1$, PCI$_2$, ..., PCI$_k$, ..., PCIu pour respectivement les n itinéraires.

Dans l'exemple représenté, on considère que la matrice MA se base sur V critères X$_1$ à X$_V$ représentatifs d'un ou de plusieurs indicateurs de performance et d'un ou de plusieurs paramètres de configuration d'itinéraire.
La matrice MA est appliquée pour au moins deux itinéraires, avec n≥2.
Dans l'exemple représenté :

- si par exemple la première colonne de valeurs est attribuée à un indicateur de performance de réseau, $x_{1,1}$, ..., $x_{n,1}$ représentent les valeurs prédites de l'indicateur de performance de réseau considéré pour respectivement les n itinéraires ;
- si par exemple la deuxième colonne de valeurs est attribuée au coût de l'itinéraire, $x_{1,2}$, ..., $x_{n,2}$ représentent les valeurs de ce coût pour respectivement les n itinéraires,
- si par exemple la dernière colonne de valeurs est attribuée à la distance de l'itinéraire, $x_{1,V}$, ..., $x_{n,V}$ représentent les valeurs de cette distance pour respectivement les n itinéraires.

De manière avantageuse, la matrice de décision multicritère MA se présente ainsi comme une alternative aux méthodes de décision classiques basées sur la définition d'une fonction unique. Elle prend en compte plusieurs critères X$_1$ à Xv qui sont non comparables entre eux. En effet, le critère « prédiction de qualité de service » n'a pas la même nature que le critère « distance », « coût », etc.
L'intérêt de la matrice MA est ainsi de considérer un ensemble de critères de différentes natures (exprimés en unités différentes), sans nécessairement les transformer en critères économiques, ni en une fonction unique. Il ne s'agit pas de rechercher un optimum, mais une solution de compromis entre un ou plusieurs paramètres réseau et un ou plusieurs paramètres routiers, un tel compromis pouvant prendre diverses formes : choix, affectation ou classement.
Un critère d'optimisation du trajet entre les positions géographiques de départ et d'arrivée est appliqué au cours d'une étape E105.
Dans un mode de réalisation, ce critère d'optimisation est une fonction de pondération F$_{pond}$ qui est appliquée aux critères de différentes nature précités.
Une telle fonction de pondération est par exemple une somme pondérée qui est connue par son accessibilité mathématique. Il s'agit de calculer, pour chaque ligne 1 de la matrice MA la somme normalisée et pondérée des critères X$_1$ à Xv, de la manière suivante :

[Math.2]
$$F_{pond} = \sum_{c=1}^{c=V} w_c . X_c \text{ avec } 1 \le l \le n \text{ et } \sum_{1}^{V} |w_c| = 1$$

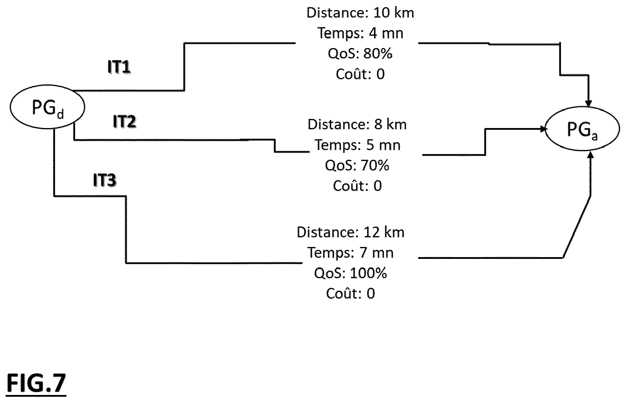

Le poids $w_c$ définit l'importance du critère $X_c$. Si les critères ont le même niveau d'importance, alors $X_c = 1/V$.
Quand $w_c < 0$ est appliqué à un critère, ce critère est minimisé.
La valeur des poids se base sur les préférences de l'utilisateur UT, sélectionnées à l'aide de l'interface IU de l'objet communicant OC ou toute interface connectée à cet objet.
L'application d'une telle fonction de pondération F$_{pond}$ aux critères X$_1$ à Xv est ainsi particulièrement adaptée aux problèmes de prise de décision lorsqu'un gros volume d'informations est considéré et que la sélection d'une solution (ici un itinéraire) est effectuée à plusieurs niveaux.
A une étape E106, un des n itinéraires est sélectionné à la suite de l'application de la fonction de pondération F$_{pond}$.
Description d'un exemple d'application du procédé de détermination d'itinéraire
En référence à la figure 7, on décrit maintenant un exemple d'application du procédé de détermination d'itinéraire selon l'invention.
Dans l'exemple de la figure 7, on considère que trois itinéraires IT1, IT2, IT3 ont été déterminés à l'issue de l'étape E3 de la figure 4.
La matrice MA se base dans cet exemple sur quatre critères, X$_1$, X$_2$, X$_3$, X$_4$ qui sont :

- X$_1$ = la distance,
- X$_2$ = le temps,
- X$_3$ = la QoS prédite,
- X$_4$ = le coût.

Le critère $X_3$ comprend la valeur prédite du débit et/ou de la latence et/ou de la fiabilité, etc.

Les valeurs de ces critères sont différentes pour chacun des trois itinéraires, mise à part le coût du trajet qui est nul.

La matrice MA s'écrit alors comme suit :

[Math.3]

$$MA = \begin{pmatrix} 10 & 4 & 80 & 0 \\ 8 & 5 & 70 & 0 \\ 12 & 7 & 100 & 0 \end{pmatrix}$$

La matrice MA normalisée s'écrit alors comme suit :

[Math.4]

$$MA_{norm} = \begin{pmatrix} 0.06 & 0.02 & 0.54 & 0 \\ 0.05 & 0.03 & 0.47 & 0 \\ 0.08 & 0.04 & 0.67 & 0 \end{pmatrix}$$

Dans cet exemple, on suppose qu'il existe deux profils différents d'utilisateurs.

Selon le premier profil, l'utilisateur UT souhaite arriver le plus rapidement possible sans se soucier du coût ni de la disponibilité du réseau de communication couvrant son trajet.

A cet effet, l'utilisateur affecte les poids $w_c$ suivants aux quatre critères précités.

$w_1 = -0.3,$
$w_2 = -0.5,$
$w_3 = 0.1,$
$w_4 = -0.1$

Dans l'étape E105 de la figure 6, la fonction de pondération $F_{pond}$ est appliquée de la manière suivante :

[Math.5]

$$F_{pond} = \max \begin{pmatrix} 0.06\,x - 0.3 & 0.02\,x - 0.5 & 0.54\,x0.1 & 0\,x - 0.1 \\ 0.05\,x - 0.3 & 0.03\,x - 0.5 & 0.47\,x0.1 & 0\,x - 0.1 \\ 0.08x - 0.3 & 0.04\,x - 0.5 & 0.67\,x0.1 & 0\,x - 0.1 \end{pmatrix}$$

[Math.6]

$$F_{pond} = \max \begin{pmatrix} 0.026 \\ 0.017 \\ 0.023 \end{pmatrix}$$

L'itinéraire sélectionné pour ce profil à l'étape E106 de la figure 6 est alors l'itinéraire IT1.

Selon le deuxième profil, l'utilisateur UT souhaite utiliser une application de conduite automatisée, ce qui signifie qu'une couverture réseau permanente et de bonne qualité doit être présente sur son trajet.

A cet effet, l'utilisateur affecte les poids $w_c$ suivants aux quatre critères précités.

$w_1 = -0.2,$
$w_2 = -0.2,$
$w_3 = 0.4,$
$w_4 = -0.2$

Dans l'étape E105 de la figure 6, la fonction de pondération $F_{pond}$ est appliquée de la manière suivante :

[Math.7]

$$F = \max \begin{pmatrix} 0.06\,x - 0.2 & 0.02\,x - 0.2 & 0.54\,x\,0.4 & 0\,x - 0.2 \\ 0.05\,x - 0.2 & 0.03\,x - 0.2 & 0.47\,x\,0.4 & 0\,x - 0.2 \\ 0.08x - 0.2 & 0.04\,x - 0.2 & 0.67\,x\,0.4 & 0\,x - 0.2 \end{pmatrix}$$

[Math.8]

$$F = \max \begin{pmatrix} 0.020 \\ 0.172 \\ 0.244 \end{pmatrix}$$

L'itinéraire sélectionné pour ce profil à l'étape E106 de la figure 6 est alors l'itinéraire IT3.

**Revendications**

1. Procédé de détermination d'un itinéraire à parcourir par un objet communicant (OC), en fonction de la disponibilité d'un réseau de communication (RCD ; RCD1, RCD2) sur ledit itinéraire, comprenant ce qui suit, au niveau dudit objet communicant :

   - à partir d'un point de départ et d'un point d'arrivée dudit itinéraire, calculer (E2) une première position géographique associée au point de départ et une deuxième position géographique associée au point d'arrivée,
   - déterminer (E3) au moins deux itinéraires entre les première et deuxième positions géographiques calculées,

   ledit procédé étant **caractérisé en ce qu'**il met en oeuvre ce qui suit :

   - envoyer (E4) à un dispositif (DP) de prédiction d'au moins un indicateur de performance de réseau de communication, au moins une position géographique (PG$_{1i}$, PG$_{2j}$) de l'objet communicant contenue entre les première et deuxième positions géographiques, pour lesdits au moins deux itinéraires,
   - recevoir (E10) en provenance du dispositif de prédiction, en relation avec ladite au moins une position géographique, deux valeurs prédites dudit au moins indicateur pour respectivement lesdits au moins deux itinéraires,
   - sélectionner (E12), parmi les au moins deux itinéraires, l'itinéraire correspondant à la valeur prédite la plus élevée parmi les deux valeurs prédites.

2. Procédé de détermination d'un itinéraire selon la revendication 1, comprenant en outre :

   - une combinaison (E104) de ladite sélection d'itinéraire à une autre sélection d'un des au moins deux itinéraires qui optimise l'application d'au moins un paramètre de configuration d'itinéraire (PCI$_k$) entre les première et deuxième positions géographiques,
   - une sélection (E106), parmi les au moins deux itinéraires, de l'itinéraire qui maximise un critère d'optimisation du trajet entre les première et deuxième positions géographiques.

3. Procédé de détermination d'un itinéraire selon la revendication 2, dans lequel la combinaison met en oeuvre :

   - une première pondération (E105) de la sélection de l'itinéraire correspondant à la valeur prédite sélectionnée dudit au moins un indicateur de performance,
   - une deuxième pondération (E105) de la sélection de l'itinéraire optimisant l'application d'au moins un paramètre de configuration d'itinéraire.

4. Procédé de détermination d'un itinéraire selon la revendication 2 ou la revendication 3, dans lequel ledit au moins un paramètre de configuration (PCI$_k$) est une application ou un service de communication destiné à être utilisé entre les première et deuxième positions géographiques.

5. Procédé de détermination d'un itinéraire selon la revendication 4, dans lequel l'application ou le service de communication est sélectionnable ou mis en oeuvre par défaut.

6. Procédé de détermination d'un itinéraire selon la revendication 4 ou la revendication 5, dans lequel la sélection de l'application ou du service de communication déclenche la génération d'au moins un paramètre de communication ou d'au moins un indicateur de performance d'un réseau de communication, ledit au moins un paramètre de communication ou ledit au moins un indicateur de performance permettant le maintien du fonctionnement de l'application ou du service de communication entre les première et deuxième positions géographiques.

7. Procédé de détermination d'un itinéraire selon l'une quelconque des revendications 1 à 6, dans lequel lorsque l'objet communicant se déplace sur l'itinéraire qui a été sélectionné et qu'une application ou un service de communication dudit objet communicant est utilisé, ladite utilisation est détectée (E13) dans le réseau de communication couvrant la position géographique courante de l'objet communicant, de sorte que lorsque l'objet communicant s'approche d'une position géographique future, pour laquelle a été calculée une valeur prédite d'au moins un indicateur de performance, et que ladite valeur prédite ne respecte pas (E14 - NOK) une valeur seuil (TH) dudit au moins un indicateur de performance, permettant d'utiliser l'application ou le service de communication, au moins un élément du réseau de communication couvrant la position géographique future est adapté (E15) pour que la valeur prédite respecte ladite valeur seuil.

8. Objet communicant (OC) adapté pour déterminer un itinéraire à parcourir par ledit objet communicant, en fonction de la disponibilité d'un réseau de communication sur ledit itinéraire, ledit objet communicant étant configuré pour :

   - à partir d'un point de départ et d'un point d'arrivée dudit itinéraire, calculer une première position géographique associée au point de départ et une deuxième position géographique associée au point d'arrivée,
   - déterminer au moins deux itinéraires entre les première et deuxième positions géographiques calculées,

   ledit objet communicant étant **caractérisé en ce qu'**il est configuré en outre pour :

   - envoyer à un dispositif de prédiction d'au moins un indicateur de performance d'un réseau de communication disponible sur les au moins deux itinéraires, au moins une position géographique de l'objet communicant contenue entre les première et deuxième positions géographiques, pour lesdits au moins deux itinéraires,
   - recevoir en provenance du dispositif de prédiction, en relation avec ladite au moins une position géographique, deux valeurs prédites dudit au moins indicateur pour respectivement lesdits au moins deux itinéraires,
   - sélectionner, parmi les au moins deux itinéraires, l'itinéraire correspondant à la valeur prédite la plus élevée parmi les deux valeurs prédites.

9. Dispositif de prédiction d'au moins un indicateur de performance d'un réseau de communication, **caractérisé en ce que** ledit dispositif est configuré pour mettre en oeuvre ce qui suit :

   - recevoir, en provenance d'un objet communicant, au moins une position géographique appartenant à au moins deux itinéraires déterminés par ledit objet communicant,
   - calculer, en relation avec ladite au moins une position géographique, deux valeurs prédites correspondantes dudit au moins indicateur pour respectivement lesdits au moins deux itinéraires,
   - envoyer à l'objet communicant les deux valeurs prédites correspondantes dudit au moins indicateur.

10. Système de détermination d'un itinéraire à parcourir par un objet communicant, **caractérisé en ce que** ledit système comprend :

    - un objet communicant selon la revendication 8,
    - un dispositif de prédiction selon la revendication 9.

11. Programme d'ordinateur comportant des instructions de code de programme pour la mise en oeuvre du procédé de détermination d'itinéraire selon l'une quelconque des revendications 1 à 7, lorsqu'il est exécuté sur un ordinateur.

12. Support d'informations lisible par un ordinateur, et comportant des instructions d'un programme d'ordinateur selon la revendication 11.

SDI

OC

PG$_a$

PG$_{1M}$

PG$_{2N}$

IT1

PG$_{1i}$

RCD

IT2

PG$_{2j}$

RCD1

RCD2

PG$_{22}$

PG$_{12}$

PG$_{21}$

PG$_{11}$

PG$_d$

UT

RES

DP

PG$_{1i}$, PG$_{2j}$

PG$_{1i}$, PG$_{2j}$

QoS

QSp$_{1i}$, QSp$_{2j}$

QSp$_{1i}$, QSp$_{2j}$

RCD

RDC1

RCD2

**FIG.1**

RES

MCO$_O$

OC

CAP$_1$, CAP$_2$,..., ..., CAP$_S$

NAV

SEL

IT1?
IT2?

IU

PROC$_O$

UTR$_O$

MS

- PG$_{11}$, ..., PG$_{1i}$,..., PG$_{1M}$
- PG$_{21}$, ..., PG$_{2j}$,..., PG$_{2N}$
- PG1$_d$, PG2$_a$
- PCI$_1$, PCI$_2$,...

MEM$_O$

PG$_O$

**FIG.2**

**FIG.3**

**FIG.4**

E12

E13 — DETECT. APPLI/SERVICE COM.

E14 — $QSp_{1i}/QSp_{2j}$ vs TH ?

OK

NOK

E15 — ADAPT.

## FIG.5

E100 — OBT. PARAM. $PCI_1, PCI_2, ..., PC_k, ..., PCI_U$

E101 — $PCI_k$ = Application/Service ?

N

O

E102 — GEN. KPI1, KPI2,...

E103 — CALC. $PCI_1, PCI_2, ..., PC_k, ..., PCI_U$ ->IT1, IT2,...

E104 — E11 COMBIN. SEL. IT1, IT2 ($PCI_1, PCI_2, ..., PC_k, ..., PCI_U$

E106 — SEL. IT1/IT2     $F_{pond}$ — E105

## FIG.6

**FIG.7**

Europäisches
Patentamt

European
Patent Office

Office européen
des brevets

# RAPPORT DE RECHERCHE EUROPEENNE

Numéro de la demande

EP 23 19 7001

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2016/150494 A1 (ERICSSON TELEFON AB L M [SE]) 29 septembre 2016 (2016-09-29) * page 14 – page 16; figure 4 * ----- | 1-12 | INV. H04W4/024 B60W60/00 G01C21/34 H04W4/029 |

**DOMAINES TECHNIQUES RECHERCHES (IPC)**

H04W
B60W
G01C

Le présent rapport a été établi pour toutes les revendications

| Lieu de la recherche | Date d'achèvement de la recherche | Examinateur |
|---|---|---|
| La Haye | 19 septembre 2023 | Mavridis, Theodoros |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
...............................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 23 19 7001

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**19-09-2023**

| Document brevet cité au rapport de recherche | Date de publication | Membre(s) de la famille de brevet(s) | Date de publication |
|---|---|---|---|
| WO 2016150494 A1 | 29-09-2016 | AUCUN | |

EPO FORM P0460

**RÉFÉRENCES CITÉES DANS LA DESCRIPTION**

**Documents brevets cités dans la description**

- FR 2113319